Europäisches Patentamt

European Patent Office

Office européen des brevets

(19)

(11) **EP 1 260 966 A1**

(12) **EUROPEAN PATENT APPLICATION**
published in accordance with Art. 158(3) EPC

(43) Date of publication:
**27.11.2002 Bulletin 2002/48**

(51) Int Cl.⁷: **G10K 15/02**, H04N 7/16

(21) Application number: **01963427.8**

(86) International application number:
**PCT/JP01/07684**

(22) Date of filing: **05.09.2001**

(87) International publication number:
**WO 02/021506 (14.03.2002 Gazette 2002/11)**

(84) Designated Contracting States:
**AT BE CH CY DE DK ES FI FR GB GR IE IT LI LU MC NL PT SE TR**

(30) Priority: **05.09.2000 JP 2000269171**

(71) Applicants:
• **NTT DoCoMo, Inc.
Tokyo 100-6150 (JP)**
• **MATSUSHITA COMMUNICATION INDUSTRIAL CO., LTD.
Yokohama-shi, Kanagawa 223-8639 (JP)**

(72) Inventors:
• **URATA, Yasuhiro
Suginami-ku, Tokyo 166-0002 (JP)**
• **II, Hidekazu
Setagaya-ku, Tokyo 157-0067 (JP)**

• **NAOI, Kuniaki
Nerima-ku, Tokyo 177-0053 (JP)**
• **KANADA, Youji
Yokohama-shi, Kanagawa 235-0023 (JP)**
• **SUGANO, Toshihiro
Kita-ku, Tokyo 114-0024 (JP)**
• **SUIMON, Kenichi
Yokohama-shi, Kanagawa 220-0023 (JP)**
• **ISHIZUKA, Toshiyuki
Yokohama-shi, Kanagawa 240-0051 (JP)**
• **TAKAHASHI, Nobuyuki
Hachioji-shi, Tokyo 193-0824 (JP)**

(74) Representative: **HOFFMANN - EITLE
Patent- und Rechtsanwälte
Arabellastrasse 4
81925 München (DE)**

(54) **PAY INFORMATION DISTRIBUTION SYSTEM**

(57)    The progress status of the download later than the actual progress status is displayed on a display unit of a terminal in a period of downloading encrypted music data MD1'. [ 92% completed ] is displayed in a display screen Z2 even though the download of the encrypted music data MD1' is completed in time t3. And, the billing request Creq is transmitted to a distribution and billing server in time t5, and a display screen Z3, showing the download is completed, is displayed on the display unit after the terminal receives the billing request C req.

FIG. 8

EP 1 260 966 A1

**Description**

Technical Field

The present invention relates to a purchasable information data distribution and billing method, an information data distribution system, a data communication terminal, an information data reception method, a control program, and a recording medium.

Background Art

With the advancement of technology in recent years, the number of information systems for distributing purchasable information data via communication networks, such as the Internet, has been increasing. Generally, a distribution system for purchasable information data is comprised of a server for distributing purchasable information data, and for carrying out billing; and a terminal such as a personal computer for selecting and receiving purchasable information data via a communication network. Purchasable information data for distribution may include a wide range of data, for example, music data, text information, picture data, such as reproduced photographs or graphics, motion pictures, computer programs and so on.

In the case of a music data distribution system, for example, a user selects purchasable music data stored in a server and downloads it. At the end of the download process, control information data is transmitted by the user's terminal to the server. If it is confirmed that download of the music data has been successfully completed, the user is billed for the data downloaded. Such a system is commonly referred to as a late billing system.

Under the music data distribution by utilizing a communication network such as the Internet, if an error occurs in a download operation, caused, for example, by a network communication problem, download of, for example, music data will fail. In a late billing system, since control information data is transmitted from a terminal to a server only after successful completion of a download operation, a user will not be billed for any incomplete data downloaded.

While this system is beneficial to a user in that s/he will not be billed for data which has not been received in full, the system is also vulnerable to misuse. Namely, since a user can monitor on a terminal screen an amount of data remaining to be downloaded and an amount of time (indicated by percentage) required to complete the download, the user can choose to intentionally terminate a download operation at a point close to completion (or prior to the control information data being transmitted to the server) and thereby avoid paying for data downloaded.

Disclosure of Invention

The present invention has been made with a view to overcoming the above-mentioned problems of the conventional art, and has as its object the provision of an information data distribution method, an information data distribution system, a data communication terminal, an information data reception method, a control program, and a record medium, for billing an end user for purchasable information data under a late billing system when the purchasable information data stored in a server is transmitted to the data communication terminal.

To achieve the above-stated object, the present invention provides an information data distribution method whereby purchasable information data stored in a server is distributed by the server via a communication network to a data communication terminal of an end user. The user of the data communication terminal is informed of completion of a successful data download operation only after the server has first been informed of the completion of the operation by transmission from the data communication terminal. On the basis of transmission of such control information data from the data communication terminal to the server, the user is then billed by the server for the data downloaded. Thus, by the method of the present invention, a late billing system is provided which, while reliable, is not vulnerable to misuse.

In one preferred embodiment, purchasable information data stored for distribution is encrypted, and a key for decrypting the data is transmitted to a user following successful completion of download of encrypted data; the data communication terminal transmits the control information data to the server upon completion of reception of the key information.

In another preferred embodiment, the data communication terminal transmits to the server, information indicating that the user accepts receipt of purchasable information data in the case that billing is performed; and data distribution commences once the server receives notification of such acceptance.

In another preferred embodiment, the server transmits to the data communication terminal, billing information showing that billing has been performed. After billing a user based on the control information data, the data communication terminal notifies the user that reception of the information data is complete, and displays the billed information.

In another preferred embodiment, a part of the communication network is a radio communication network.

In another preferred embodiment, purchasable information data comprises at least one of music data, picture data, or computer programs.

The present invention also provides an information data distribution method comprising a step of distributing information data stored in a server to a data communication terminal via a communication network; a step of displaying on a display unit of the data communication terminal, types of information data which the server stores; a step of prompting a user to select on the basis of and from among the displayed information data types, and purchasable information data for download in the case that a billing operation will be performed for download of such data; a step of distributing information data selected by the user from the server to the user's data communication terminal; a step of transmitting control information data indicating to the server completion of information data distribution from the data communication terminal following receipt of all selected data by the data communication terminal, and after displaying on the display unit all of the selected information data received by the data communication terminal; and a step of performing billing of the user is initiated on condition that the server receives the control information data.

The present invention further provides an information data distribution system wherein a server distributes to a data communication terminal via a communication network, purchasable information data stored in the server; and wherein the server distributes, in response to a request received from the data communication terminal, purchasable information data to the data communication terminal, and further, bills the user of the data communication terminal on condition that control information data indicating completion of data distribution is received by the server from the data communication terminal.

The present invention also further provides a data communication terminal comprising a reception unit for receiving purchasable information data; a transmission unit for transmitting control information data to a server when download of purchasable information data from the server is complete; a notification unit for notifying the user of progress and completion of download of purchasable information data; a control unit for notifying the user that reception of the purchasable information data is complete after detecting that the reception of purchasable information data is complete by generating control information data, and transmitting it to the server by utilizing the transmission and reception unit.

In one preferred embodiment, transmitted data comprises encrypted data and key data to be used for decrypting the encrypted data. The key data is distributed subsequent to distribution of the encrypted data; and, once the control unit detects that reception of the encrypted data and the key data is complete, it generates and transmits to the server control information, notifying completion of data download, and next, notifies the user that the operation is complete.

In another preferred embodiment, the notification unit is a display unit which displays a picture; and the control unit displays on the display unit, the progress status of reception of the purchasable information data which is later than the actual progress status.

In a preferred embodiment, the progress status of reception of the purchasable information data is displayed on the display unit as a percentage; and the control unit controls the progress status, displayed on the display unit, to one which is, at random, within a specified range of less than 100% at a time when reception of the purchasable information data is completed.

The present invention also provides a data reception method comprising a step of receiving a total amount of data of the purchasable information data transmitted and distributed from a server; a step of starting reception of the purchasable information data, and evaluating an amount of received integrated data during reception of the purchasable information data after receiving the total amount of data; a notification step of evaluating the progress status which is later than the actual progress status of reception of the purchasable information data, by the amount of the integrated data and the total amount of the data during reception of the purchasable information data, and notifying a user of evaluated progress status; a step of transmitting a billing request with regard to the purchasable information data to a server after reception of the purchasable information data is completed; and a step of notifying the user that reception of the purchasable information data is completed after the billing request is transmitted.

In a preferred embodiment, random numbers are generated in the notification step before notification of the progress status is performed for the purchasable information data, the amount of the integrated data, and the total amount of the data to be notified which is evaluated by the random numbers.

Also, the present invention is performed in a manner such that a program for receiving purchasable information data is distributed to a user via an electronic communication channel according to the above information reception method, or the program is recorded in a recording medium readable by computer, and distributed to a user.

The present invention provides an information data distribution method such that the server generates random numbers, evaluates the second total amount of data based on first total amount of data, which shows the total amount of data of the purchasable information data to be distributed to a data communication terminal from the server, and random numbers, the server starts to transmit the purchasable information data requested by the user of the data communication terminal after transmitting the first total amount of data and the second total amount of data to the data communication terminal; the data communication terminal evaluates an amount of received integrated data of the purchasable information data during reception and evaluates the progress status which is later than the actual progress status of the purchasable information data by the amount of the integrated data and the total amount of the second information data, notifies the user of evaluated progress status, and determines whether reception of the purchasable information data is completed; the communication terminal then transmits to a server, a billing request with regard to the purchasable information data after completion of reception of the purchasable information data.

Also, the present invention provides a server comprising a control unit for generating random numbers, and for evaluating a total amount of second information data based on the random numbers, and a total amount of first data which shows the total amount of data of the purchasable information data which is distributed to a data communication terminal; and a transmission unit which starts to transmit the purchasable information data after transmitting to the data communication terminal, the total amount of the first data and the total amount of the second information data.

Brief Description of the Drawings

Fig. 1 is a block diagram illustrating the configuration of the music data distribution system according to the embodiment of the present invention.

Fig. 2 is a block diagram illustrating the configuration of the terminal MS used in the music data distribution system.

Fig. 3 is a block diagram illustrating the configuration of distribution and billing server 12 used in the music data distribution system.

Fig. 4 is a format diagram of the music data table TBL memorized in a memory unit 124 of distribution and billing server 12.

Fig. 5 is a sequence diagram explaining the operation of the music data distribution system.

Fig. 6A, Fig. 6B, Fig. 6C, Fig. 6D, Fig. 6E, and Fig. 6F are the diagrams illustrating an example of the display screen displayed on display unit 260 of the terminal MS in the process for selecting the music which is downloaded.

Fig 7 is a flowchart for the operation of CPU 210 based on the display program.

Fig 8 is a conceptual diagram illustrating the relationship between the communication between distribution and billing server 12 and the terminal MS, and the display screen on display unit 260.

Best Mode for Carrying out the Invention

Embodiments of the present invention will now be described with reference to the drawings. Examples in which the present invention is applied to the music data distribution system will be described. However, the present invention is not restricted to the embodiments, and may be modified in the Claims of the present invention.

<1. Configuration of the music data distribution system>

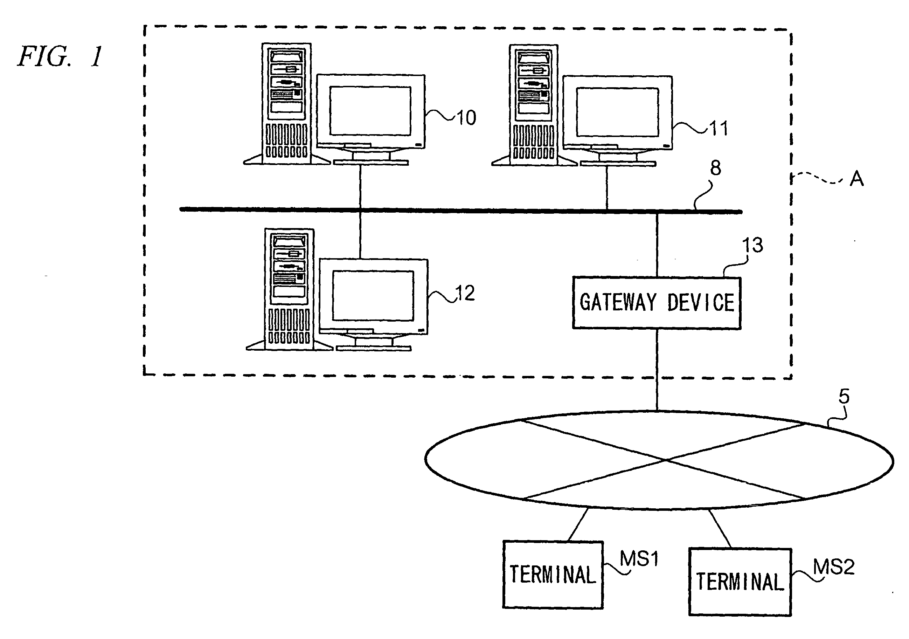

Fig. 1 is a block diagram illustrating the configuration of the music data distribution system. As shown in this figure, the music data distribution system comprises a communication network 5, a terminal MS1, MS2, and a content provider facility A.

The communication network 5 is a radio communication network 5 which may perform radio data communication with the terminal MS1, MS2. In this embodiment, the communication network 5 is the radio communication network, but the communication network 5 may be a fixed communication network, or a combination of the radio communication network and the fixed communication network.

Next, the terminal MS1,MS2 download the music data which a user requests, and the terminal MS1, MS2 are compact and lightweight radio data communication terminals. As shown in fig. 1, there is a terminal MS1 and a terminal MS2, but the number of terminals may total either one, or three, or more. In the following descriptions, the terminal MS is used if there is no need to specify the terminal MS1, MS2.

A content provider facility A comprises a operation management server 10, an authentication server 11, a distribution and billing server 12, and a gateway device 13, all of which are connected mutually by a local area network 8. The gateway device 13 connects the local area network 8 to the communication network 5. The operation management server 10 manages the overall content provider facility A; monitors operation status of each server; and displays the operation status on the monitor. A system manager knows immediately when a malfunction occurs in any of each server; therefore, is able to deal with the malfunction properly.

Also, the authentication server 11 is a server to authenticate correctness of the terminal MS, which perform access via the gateway device 13, by a user ID and so forth. The user ID is the identification information to be assigned to the terminal MS owned by a user, who performs a contract for a purchased distribution service of the music data, on an optional basis; and is memorized in the authentication server 11 in advance. The contract for the purchased distribution service may be performed in writing or on the Web.

And, the distribution and billing server 12 performs management of the music data and distribution, and billing processing based on the distribution.

In a general music data distribution system, music data is distributed after being encrypted to protect copyright. According to the music data distribution system in this embodiment, the distribution of the encrypted music data is performed as follows :

(1) The distribution and billing server 12 encrypts the music data by a decryption key; and generates the encrypted music data.
(2) The terminal MS generates a public key and a secret key.

(3) The terminal MS transmits the generated public key to the distribution and billing server 12.

(4) The distribution and billing server 12 encrypts the decryption key by the received public key; and generates an encrypted decryption key.

(5) The distribution and billing server 12 transmits the encrypted music data and encrypted decryption key to the terminal MS.

(6) The terminal MS decrypts the music data from the encrypted music data by the decryption key after obtaining the decryption key by decrypting the received encrypted decryption key. In this way, the user is able to use the music data.

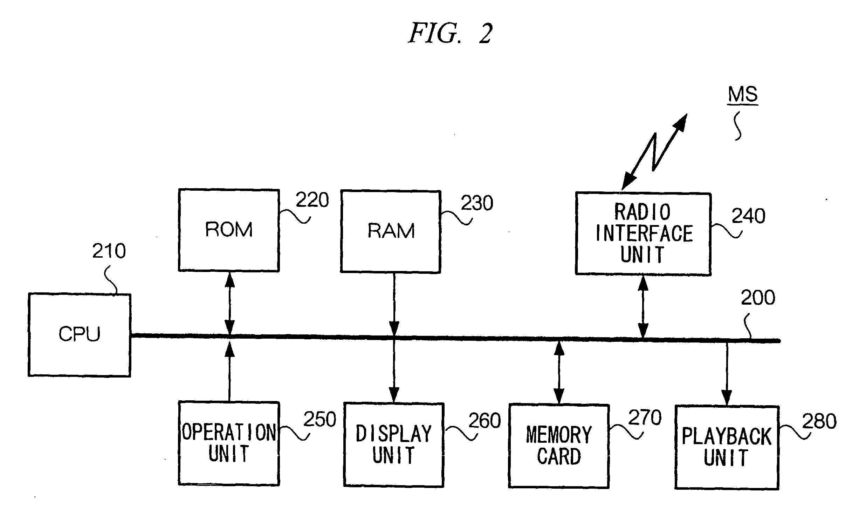

Fig. 2 is a block diagram illustrating the configuration of the terminal MS. As shown in this figure, the terminal MS comprises CPU 210 connected to each configuration unit via Bus 200, ROM 220 which stores various control programs such as a boot program, a WWW browser and so forth, and RAM 230 which functions as operation area for CPU 210. Further, the terminal MS comprises a radio interface unit 240 which performs transmission and reception of the information with the communication network 5 via the radio channel, an operation unit 250 which the user inputs an instruction, a display unit 260 for displaying the progress status of the download, and types of the contents which are downloaded, a memory card 270, and a playback unit 280. The memory card 270 is attachable/detachable to and from a slot (not shown here )installed in the terminal MS, and the encrypted music data and encrypted decryption key downloaded from the distribution and billing server 12 are stored in the memory card 270. The CPU 210 generates the decryption key from the encrypted decryption key; and decrypts the music data from the encrypted music data by the decryption key. And the playback unit 280 converts the played music data into D/A, and outputs the played music data as a music signal.

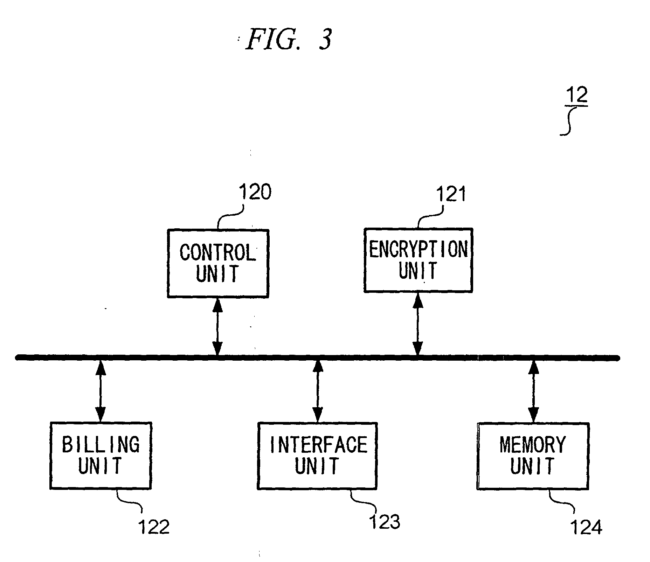

Fig. 3 is a block diagram illustrating the configuration of the distribution and billing server 12. As shown in this figure, the distribution and billing server 12 comprises a control unit 120, an encryption unit 121, a billing unit 122, a interface unit 123, and a memory unit 124. Firstly, the control unit 120 is configured by CPU and so forth, and controls the overall the distribution and billing server 12.

The encryption unit 121 is a unit for encrypting the music data to be distributed, and for encrypting the decryption key by the received public key from the terminal MS. Next, the billing unit 122 performs transmission and reception of information specifying the music data to download to the terminal MS; and billing processing to the user who owns the terminal MS.

The interface unit 123 functions as the interface for performing communication between the local area networks 8. A music data table is memorized in the memory unit 124.

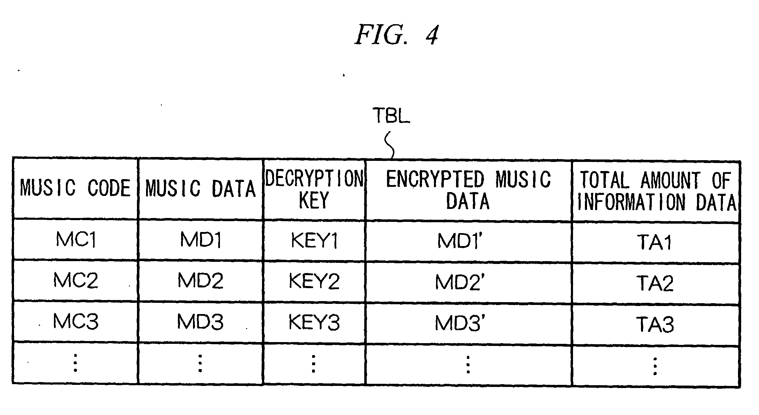

Fig. 4 is a format diagram of the music data table TBL memorized in the memory unit 124. As shown in this figure, music codes MC1, MC2, MC3 and so forth assigned to each music data on an optional basis, music data MD1, MD2, MD3 and so forth, decryption keys KEY 1, KEY 2, KEY 3 and so forth used for encrypting and decrypting each music data, encrypted music data MD'1, MD'2, MD'3 and so forth, and the total amount of data TA1,TA2, TA3 and so forth for displaying the total amount of data for each encrypted music data are stored in the music data table TBL in the status, each of which corresponds to each other respectively. The distribution and billing server 12 may extract the encrypted music data MD'1, MD'2, MD'3, and the decryption keys KEY 1, KEY 2, KEY 3 and so forth used for decryption, from the music data table TBL by specifying the music codes MC1, MC2, MC3 and so forth.

<2. Operation of the music data distribution system>

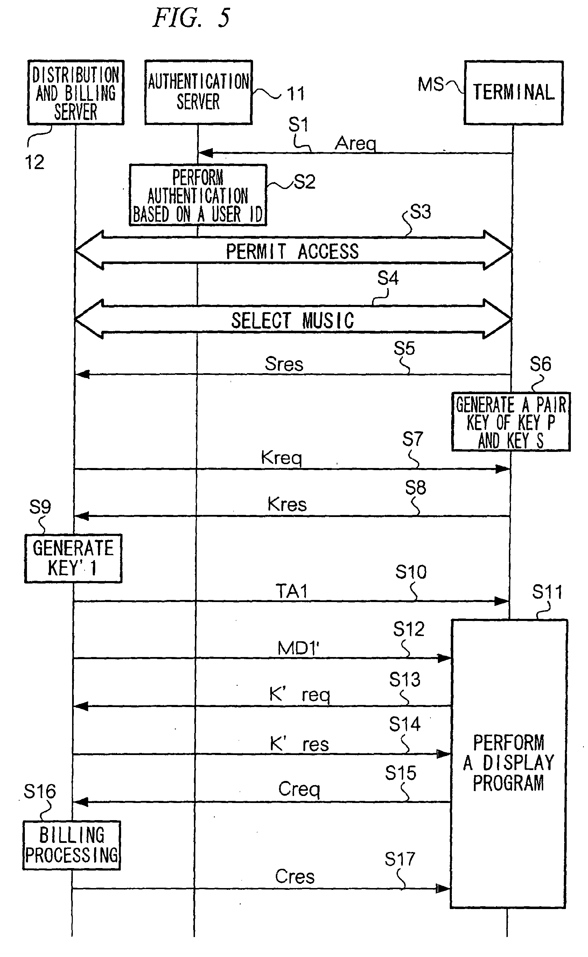

Fig. 5 is a sequence diagram explaining the operation of the music data distribution system. In the following description, it is assumed that the distribution and billing server 12 has already performed encryption to the encrypted music data from the music data by the decryption key.

Firstly, when the terminal MS transmits an access request Areq including a user ID to the authentication server 11 (Step S1), the authentication server 11 performs authentication based on the user ID (Step S2). If the user ID is correct, the authentication server 11 permits access from the terminal MS, therefore, the terminal MS may access to the distribution and billing server 12 (Step S3). On the other hand, if the user ID is incorrect in Step S2, the authentication server 11 refuses the access from the terminal MS.

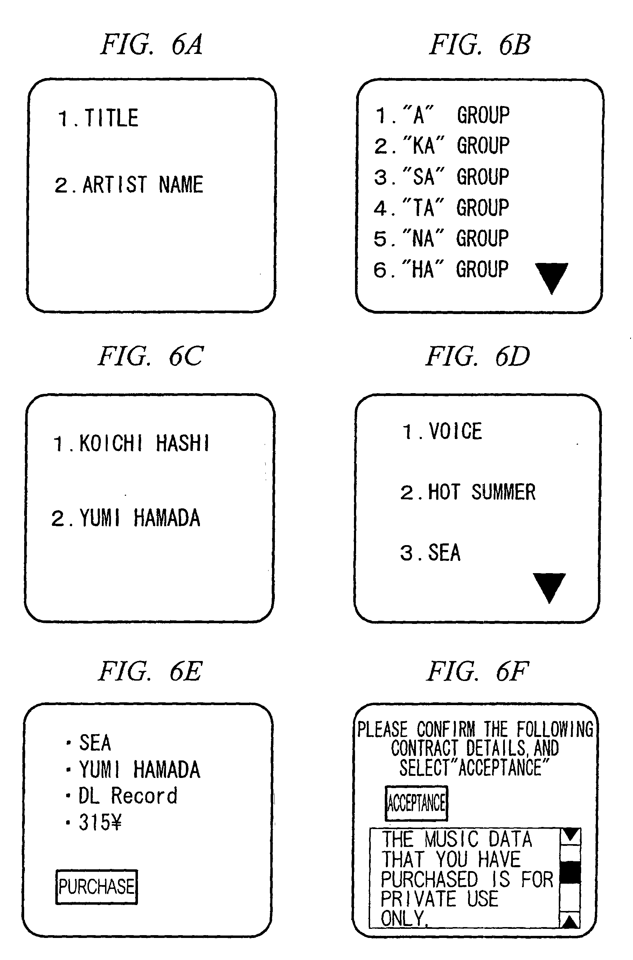

Next, the distribution and billing server 12 communicates with the terminal MS; displays a screen for prompting to select music on the display unit 260; and prompts the user to select the music for the download (Step S4). Concretely, the distribution and billing server 12 displays a screen for prompting selection of music by a title, or an artist name on the display unit 260 as shown in Fig. 6A; and prompts the user. When the user selects either the title or the artist name, the distribution and billing server 12 displays Japanese phonemic groups in order (In this case, Japanese ones) on the display unit 260 as shown in fig. 6B; and prompts the user to select again. At this point, when the user selects the artist name and " Ha " group, the distribution and billing server 12 displays the artist names such as [ Koichi Hashi ], or [ Yumi Hamada ] and so forth on the display unit 260 as shown in Fig. 6C; and prompts the user to select again. When the user selects [ Yumi Hamada ], the distribution and billing server 12 displays several music names as shown in Fig. 6D; and prompts to select the music. When the user selects [SEA ], the distribution and billing server 12 displays a screen including display information for specifying contents, such as a music name, an artist name, a record company name, a price and so forth, and " purchase " a soft button for accepting a purchase request of the contents on the display unit 260 as shown in fig. 6E. And, when the user selects " purchase ", the distribution and billing server 12 displays a screen including display information on the contract details, and a soft button, " accept " for checking acceptance of the contract details on the display unit 260. The contract details include information that the download is performed on condition that the billing is performed, a billing method and so forth. At this point, when the user selects " accept ", the download processing for the music data starts. By the way, it is assumed that the user specifies music specified by a music code MC1 in the following description.

In fig. 5, the terminal MS transmits an acceptance response Sres to the distribution and billing server 12(Step S5). The acceptance response Sres includes the music code MC1 for specifying the music data for the download. Next, the terminal MS generates a pair of a public key and a secret key(Step S6). Next, the distribution and billing server 12 transmits a public key request Kreq to the terminal MS(Step S7). The terminal MS, which has received the public key request Kreq, transmits a public key response Kres including the public key KEYp to the distribution and billing server 12(Step S8).

Next, the distribution and billing server 12 encrypts a decryption key KEY1 corresponding to the music code MC1 by the received public key KEYp; and generates an encrypted decryption key KEY'1(Step S9). And, the distribution and billing server 12 transmits to the terminal MS, the total amount of data TA1 for the encrypted music data MD1' corresponding to the received music code MC1(Step S10). The CPU 210 in the terminal MS performs a display program when receiving the total amount of data TA1(Step S11).

The display program is a control program to be memorized in ROM 220 in the terminal MS, and the control program for displaying the progress status of the download for the encrypted music data MD1' on the display unit 260. In parallel with a communication control in Fig. 5, the display program is performed by the CPU 210. By the way, the details of the CPU 210 operation by the display program will be described later.

Next, the distribution and billing server 12 transmits the encrypted music data MD1' to the terminal MS(Step S12). On the other hand, the CPU 210 in the terminal MS evaluates the amount of integrated data for the encrypted music data MD1' which is downloaded; and generates the amount of the integrated data Q while receiving the encrypted music data MD1'. The encrypted music data MD1' is not decrypted without utilizing the decryption key KEY1, copyright of the music data MD1 may be protected effectively even though it is intercepted in a communication channel by a third person.

Next, the terminal MS determines whether the download for the encrypted music data MD1' is completed or not based on the amount of the integrated data Q and total amount of the data TA1. And, the terminal MS transmits an encrypted decryption key request K'req to the distribution and billing server 12 at the time when the download for the encrypted music data MD1' is completed(Step S13).

By the way, the terminal MS cannot decrypt the music data MD1 from the encrypted music data MD1' without utilizing the decryption key KEY 1. Because of the above reason, the user cannot use the music data MD1 till the terminal MS receives the encrypted decryption key KEY' 1.

On the other hand, even though the encrypted decryption key request K' req is transmitted to the distribution and billing server 12, if interference occurs in the communication network 5 after the transmission, the terminal MS cannot receive the encrypted decryption key KEY'1. Therefore, the distribution and billing server 12 does not perform to bill immediately when receiving the encrypted decryption key request K' req. And, the distribution and billing server 12 treats the received encrypted decryption key request K'req as a temporary billing request; and transmits to the terminal MS, the encrypted decryption key KEY'1 as an encrypted decryption key response K'res(Step S14).

Next, the terminal MS transmits the billing request Creq to the distribution and billing server 12 when receiving the encrypted decryption key response K'res (Step S15). And, the terminal MS obtains the decryption key KEY1 by decrypting the encrypted decryption key KEY' 1 with the secret key KEYs. As a result, the terminal MS may decrypt the music data MD1 from the encrypted music data MD1' by utilizing the decryption key KEY1, and the music data MD1 may be replayed in the end.

Next, when the distribution and billing server 12 receives the billing request Creq, the billing processing is performed in billing unit 122(Step 16). And, the distribution and billing server 12 transmits the billing response Cres to the terminal MS(Step S17). On the other hand, the billing response Cres is received by the terminal MS, and the terminal MS displays a message showing the download is completed on the display unit 260 in processing of the display program. Therefore, the user knows that the download is completed properly, and the music data MD1 may be replayed.

It is to be noted that when a communication channel is cut off due to a malfunction or some other reason prior to transmitting the billing response Cres to the terminal MS, the billing process can not be confirmed by the terminal MS even though it has been performed. In this embodiment, however, if the download is performed after the acceptance response Sres is received by the distribution and billing server 12, no problem will arise. In other words, the acceptance response Sres is transmitted from the terminal MS thereby enabling billing to be performed smoothly.

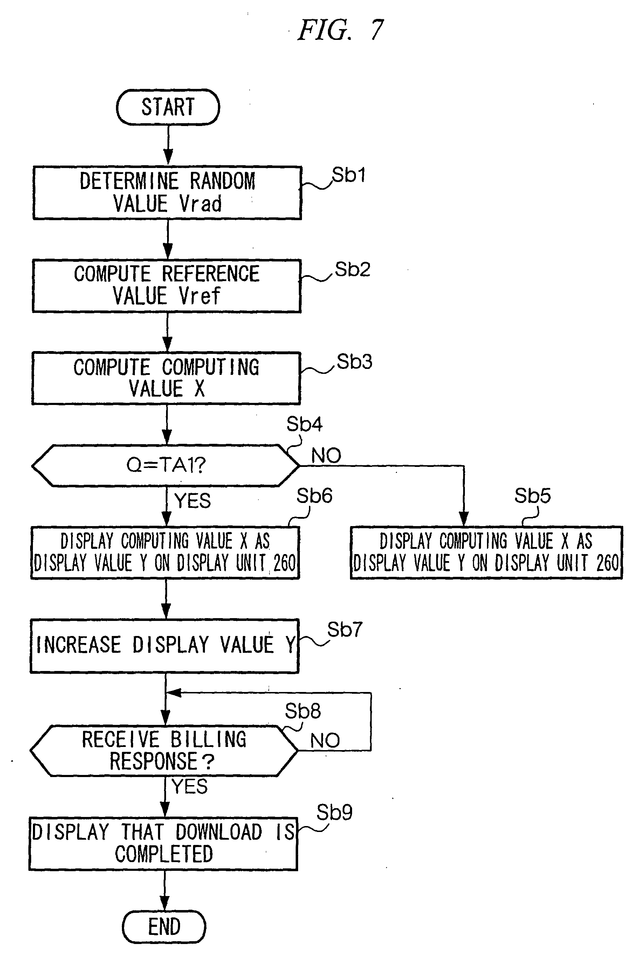

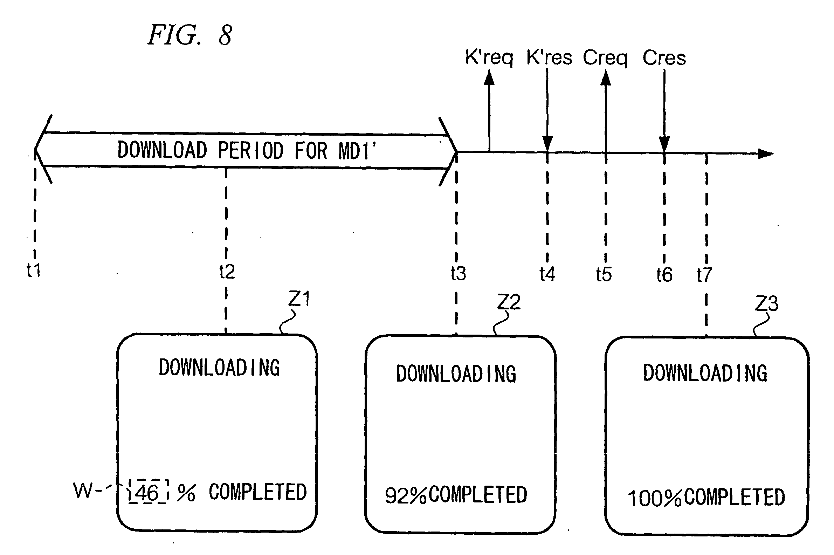

Fig. 7 is a flowchart for the display program performed by CPU 210 in Step 11 described above. Fig. 8 is a conceptual diagram illustrating the relationship between the communication between the distribution and billing server 12 and the terminal MS, and the display screen on the display unit 260. In this embodiment, the progress status of the download displayed on the display unit 260 is displayed by percentage for the amount of downloaded integrated data to the total amount of the data which will be downloaded. Also, time t1 through time t3 in fig. 8 correspond to S12 in fig. 5. And, time t4, time t5, and time t6 corresponds to Step S14, Step S15, and Step S17 respectively.

In Fig. 7, CPU 210 determines a random value Vrad(Step Sb1). In details, the CPU 210 determines the random value Vrad within a range from " 90 " to " 99 " inclusive at random. By the way, the range which the random value Vrad is extracted may be a specified range under " 100 ", for example, it may be from 75 to 95 inclusive.

Next, the CPU 210 evaluates a reference value Vref by computing the following formula based on the total amount of data TA1 and the random value Vrad (Step Sb2).

$$Vref = TA1/V\,rad$$

Next, the CPU 210 computes the amount of integrated data Q for the downloaded encrypted music data MD1'; and evaluates a computing value X by the following formula based on the amount of integrated data Q and reference value Vref(Step Sb3).

$$X = Q/Vref$$

Thus, the computing value X is computed by utilizing the random value Vrad which is under " 100 ", the computing value X is always smaller than percentage(value) to the total amount of data TA1 for the amount of integrated data Q.

Next, the CPU 210 determines whether the amount of integrated data Q matches the total amount of data TA1 or not(Step Sb4). If the result is [ No ], the CPU 210 displays the computing value X as a display value Y on the display unit 260(Step Sb5). For example, Z1 displays the status of the display unit 260 in t2 (Vrad=92, TA1=100, Q=50Kbyte) in fig. 8 . In this case, the computing value X is " 46 ". Therefore, " 46 ", which is the display value Y, is displayed in area W. The progress status(46% completed) which is later than the actual progress status(50% completed) of the download is displayed on the display unit 260.

On the other hand, if a result in Step Sb6 is [ Yes ] , that is to say, if the download for the encrypted music data MD1' is completed, the CPU 210 displays the computing value X as the display value Y on the display unit 260(Step Sb6). For example, Z2 shows the status of the display unit 260 that V rad and TA1 are set as described above, and when the amount of integrated data Q matches the total amount of data TA1 (when the download is completed). In this case, the computing value X is " 92 "(the random value V rad), a message [ Downloading. 92 % completed] is displayed on the display unit 260.

And, the CPU 210 increases the display value Y to a maximum rate, which is less than " 100 " depending on an average transmission rate(Step Sb7). In details, the CPU 210 evaluates the average transmission rate by dividing the total amount of data TA1 by the time spent for the download; and increases the display value Y according to the average transmission rate. Therefore, this method prevents a user from guessing the completion of download based on change of the progression for the display value Y.

Next, the CPU 210 determines whether the billing response Cres is received from the distribution and billing server 12 or not(Step Sb8). And, the CPU 210 displays a display screen Z3 showing a message " The download is 100 % completed. " on the display unit 260 in time t7 in fig. 8 as the display value Y " 100 " after receiving the billing response Cres (Step Sb9).

In fig. 8, the terminal MS completes reception of all the necessary information to replay the music data MD1 when receiving the decryption key response K'res in time t4. On the other hand, the terminal MS completes transmission and reception of all the necessary information for the billing when receiving the billing request Cres in time t6. In this embodiment, the CPU 210 displays a message showing " the download is completed " on the display unit 260 after time t6.

Therefore, it is impossible for the user to obtain the encrypted decryption key KEY1' in time t4, which has received the encrypted decryption key response K'res. Accordingly, this embodiment prevents a user from cutting off a communication channel between time t4 and time t5 on purpose.

Additionally, the random value Vrad is displayed on the display unit 260 as the display value Y at the time when the download for the encrypted music data MD1' is completed, therefore, it is impossible for the user to know when the billing request Creq is transmitted because of the display value Y even though the user repeats to cut off a communication channel on purpose by referring to the display value Y. As a result, this method prevents non-billing of the user from even in a case that the user purposefully cuts off the communication channel several times.

<3. Modifications>

The present invention has been described with regard to the first embodiment so far. However, this embodiment is not to be taken as limiting, and may be performed with the following modifications.

(1) Progress status of the download is displayed on the display unit 260 by percentage in the above embodiment, however, the present invention is not restricted to this embodiment, the progress status of the download may be displayed by any means. For example, it may be displayed by a bar graph, a circle graph, and so forth.

(2) Completion of the download is notified to a user by displaying the progress status of the download on the display unit 260 in the above embodiment, however, the present invention is not restricted to this embodiment, any notification methods, or any means may be used if it appeals to five senses. For example, the completion of the download may be notified to the user by sound, or, by installing a vibrator, which makes mechanical vibrations, into the terminal MS, it may be notified by a sense of touch by making the vibrations at the time when the reception of information is completed.

(3) The music data is taken as an example of the information distributed to the terminal MS in the above embodiment, however, the present invention is not restricted to types of the information. For example, picture data including letter information, a freeze-frame picture, and a moving picture, or a computer program, or when these combinations are downloaded, the present invention may be performed as well.

Also, the terminal MS is taken as an example of the terminal for receiving distribution of the information in the above embodiment, however, the present invention may be applied to a data communication terminal comprising a communicative function. For example, the present invention may be applied when the information is transmitted to a personal computer connected to the internet.

(4) The terminal MS displays a message showing " The download is completed " after receiving the billing response C res in the above embodiment, the message showing " The download is completed " may be displayed after transmitting the billing request C req. On the one hand, the distribution and billing server 12 knows that the terminal MS receives all the necessary information to playback the music data MD1 by receiving the bill request Creq; and is able to perform to bill, on the other hand, if the user knows the completion of the download after the billing request Creq is transmitted; and cuts off a channel immediately, the billing is performed to the user as the billing request Creq is already transmitted.

Also, the billing request Creq for permitting to bill is transmitted from the terminal MS in this embodiment, it may be considered that transmission of the control information data, showing the reception of all the necessary information is completed, is performed in the terminal.

(5) The encrypted information configured by the encrypted music data MD1' and encrypted decryption key KEY'1 is downloaded to the terminal MS from the distribution and billing server 12 in the above embodiment, the information for the present invention may be the information which is not encrypted, or the only encrypted information, or the only key information. It is essential only to receive all the information by a data communication terminal when the user downloads the necessary information; and to notify the user that the reception is completed after the completion of the reception is transmitted to the server.

(6) The random value Vrad is generated in the terminal MS, the percentage for the integrated reception data to the total amount of data is converted based on the generated random value Vrad, and the random value Vrad is displayed when all the data is received in the above embodiment, however, it may be converted by a fixed value instead of the random value V. In this case, a circuit or software for generating the random value Vrad is not necessary in the data communication terminal, therefore, the configuration may be simplified.

(7) Among the information to evaluate the computing value X, the information to be transmitted to the terminal MS from the distribution and billing server 12 is the total amount of data TA1 and the encrypted music data MD1', however, the present invention is not restricted to such information. For example, the random value Vrad is determined in the distribution and billing server 12, and the distribution and billing server 12 may perform to transmit the reference value V ref to the terminal MS after the reference value V ref is evaluated by the random value Vrad and the total amount of data TA1. In this case, the reference value V ref is transmitted from the distribution and billing server 12 to the terminal MS before the display program in Step S11 in fig. 5 gets started. And, the progress status which is later than the actual progress status of the download is displayed on the display unit 260 by performing the steps from Step Sb3 in fig. 7 as the display program in the terminal MS.

Also, for example, random numbers are generated in the distribution and billing server 12, and the distribution and billing server 12 may perform to transmit the total amount of the dummy data to the terminal MS after the total amount of dummy data which is larger than the actual total amount of data is evaluated based on the total amount of data TA1 and random numbers. In this case, the total amount of dummy data is transmitted to the terminal MS from the distribution and billing server 12 before the display program in Step S11 in fig. 5 gets started. And, the progress status which is later than the actual progress status of the download is computed based on the total amount of dummy data in the terminal MS.

## Claims

1. An information data distribution method comprising:

   a server for storing information data and distributing said information data to a data communication terminal via a communication network;
   said data communication terminal transmitting to said server, control information data indicating completion of reception of said information data upon completion of reception of said information data distributed to said data communication terminal;
   said data communication terminal then notifying a user of said data communication terminal that reception of said information data is complete ; and
   said server billing said user based on said control information data.

2. An information data distribution method according to Claim 1,
   wherein said information data includes encrypted information data and key information for decrypting the encrypted information data;
   wherein said server distributes said key information after distributing said encrypted information data; and
   wherein said data communication terminal transmits said control information data to said server following completion of reception of said key information.

3. An information data distribution method according to Claim 1,
   wherein said data communication terminal transmits to said server, acceptance information data indicating that said user accepts to receive distribution of said information data on condition that billing is performed; and
   wherein distribution of said information data gets started on condition that said server receives said acceptance information data.

4. An information data distribution method according to Claim 1,
   wherein said server transmits to said data communication terminal, billed information data showing billing is performed after performing to bill said user based on said control information data; and
   wherein said data communication terminal notifies said user that reception of said information data is completed when receiving said billed information data.

5. An information data distribution method according to Claim 1,
   wherein a part of said communication network is a radio communication network.

6. An information data distribution method according to Claim 1,
   wherein said information data comprises at least either one of music data, picture data, or computer program.

7. An information data distribution method comprising:

   a step of distributing information data stored in a server to a data communication terminal via a communication network;
   a step of displaying types of information data, which said server stores, on a display unit of said data communication terminal, and of prompting a user to select;
   a step of displaying a screen for accepting receipt of distribution of the information data on said display unit on condition that billing is performed, and for prompting said user to accept when said user selects types of information data displayed on said display unit;
   a step of distributing information data selected by said user to said data communication terminal from said server after said user inputs acceptance in said data communication terminal;
   a step of transmitting control information data, showing distribution is completed, to said server from said data communication terminal when all of said selected information data is received by said data communication terminal, and of displaying on said display unit, all of said selected information data is received; and
   a step of billing said user on condition that said server receives said control information data.

8. An information data distribution system comprising:

   a server distributes to a data communication terminal via a communication network, information data stored in a server;
   said server distributes said information data to said data communication terminal according to a request from said data communication terminal, and bills a user of said data communication terminal on condition that control information data, showing distribution of said information data is completed, is received from said data communication terminal; and
   said data communication terminal notifies a user that reception of said information data is completed when reception of said information data is completed after transmitting said control information data to the server.

9. A data communication terminal comprising:

a transmission and reception unit for performing reception of information data stored in a server, and transmission of control information data showing distribution of said information data is completed via a communication network;

a notification unit for performing to notify a user with regard to reception of said information data; and

a control unit for notifying said user that reception of said information data is completed by utilizing said notification unit after detecting that reception of said information data is completed, generating said control information data, and transmitting said control information data to said server by utilizing said transmission and reception unit.

10. A data communication terminal according to Claim 9,

wherein encrypted information data and key information for decrypting the encrypted information data are included in said information data, and said key information is distributed after distribution of said encrypted information data; and

wherein said control unit detects that reception of said encrypted information data and said key information is completed, generates said control information data, and notifies said user that reception of said information data is completed by utilizing said notification unit after transmitting said control information data to said server by utilizing said transmission and reception unit.

11. A data communication terminal according to Claim 9,

wherein said notification unit is a display unit which displays a picture; and

wherein said control unit displays on said display unit, progress status of reception of said information data which is later than actual progress status.

12. A data communication terminal according to Claim 11,

wherein progress status of reception of said information data is displayed on said display unit by percentage; and

wherein said control unit controls progress status, displayed on said display unit, to be random within a specified range of less than 100% at the time when reception of said information data is completed.

13. An information data reception method comprising:

a step of receiving a total amount of information data transmitted and distributed from a server;

a step of starting reception of said information data stored in a server, and of evaluating an amount of received integrated information data during reception of said information data after receiving total amount of information data;

a notification step of evaluating progress status which is later than actual progress status of reception of said information data by the amount of said integrated information data and the total amount of said information data during reception of said information data, and notifying a user of evaluated progress status;

a step of transmitting a billing request with regard to said information to a server after reception of said information is completed; and

a step of notifying said user that reception of said information is completed after said billing request is transmitted.

14. An information data reception method according to Claim 13,

wherein random numbers are generated in said notification step before a notification of said progress status is performed, and progress status of said information data which should be notified is evaluated by said random numbers, the amount of said integrated information data, and the total amount of said information data.

15. A program for performing control of a data communication terminal by computer comprising:

a step of receiving total amount of information data transmitted and distributed from a server;

a step of starting reception of said information data; and of evaluating amount of received integrated information data during reception of said information data after receiving total amount of information data;

a notification step of evaluating progress status which is later than actual progress status of reception of said information by the amount of said integrated data and the total amount of said information data during reception of said information data, and notifying a user of evaluated progress status;

a step of transmitting a billing request with regard to said information data to a server after reception of said information data is completed; and

a step of notifying said user that reception of said information data is completed after said billing request is transmitted.

**16.** A recording medium, readable by computer, for recording a program for performing control of a data communication terminal comprising:

a step of receiving total amount of information data transmitted and distributed from a server;
a step of starting reception of said information data, and evaluating amount of received integrated information data during reception of said information data after receiving total amount of information data;
a notification step of evaluating progress status which is later than actual progress status of reception of said information data by the amount of said integrated information data and the total amount of said information data during reception of said information data, and of notifying a user of evaluated progress status;
a step of transmitting a billing request with regard to said information data to a server after reception of said information data is completed; and
a step of notifying said user that reception of said information data is completed after said billing request is transmitted.

**17.** An information data distribution method wherein:

a server generating random numbers, evaluates second total amount of data based on first total amount of data showing total amount of information data to be distributed to a data communication terminal from a server and said random numbers, and starts to transmit said information data to said data communication terminal after transmitting said first total amount of information data and said second total amount of information data to said data communication terminal; and
said data communication terminal evaluates amount of received integrated information data of said information data during reception of said information data, evaluates progress status which is later than actual progress status of said information data by amount of said integrated information data and total amount of said second information data, notifies a user of evaluated progress status, and determines whether reception of said information data is completed or not by the total amount of said first information data and the amount of said integrated information data; and
said data communication terminal transmits to a server, a billing request with regard to said information data after completing reception of said information data.

**18.** A server comprising:

a control unit for generating random numbers, and evaluating total amount of second information data based on said random numbers and total amount of first information data showing total amount of information data which is distributed to a data communication terminal; and
a transmission unit which starts to transmit said information data after transmitting to said data communication terminal, the total amount of said first information data and the total amount of said second information data.

*FIG. 1*

GATEWAY DEVICE

TERMINAL ~MS1

TERMINAL ~MS2

FIG. 2

EP 1 260 966 A1

## FIG. 3

12

## FIG. 4

EP 1 260 966 A1

TBL

| MUSIC CODE | MUSIC DATA | DECRYPTION KEY | ENCRYPTED MUSIC DATA | TOTAL AMOUNT OF INFORMATION DATA |
|:---:|:---:|:---:|:---:|:---:|
| MC1 | MD1 | KEY1 | MD1' | TA1 |
| MC2 | MD2 | KEY2 | MD2' | TA2 |
| MC3 | MD3 | KEY3 | MD3' | TA3 |
| ⋮ | ⋮ | ⋮ | ⋮ | ⋮ |

## FIG. 5

## FIG. 6A

1. TITLE

2. ARTIST NAME

## FIG. 6B

1. "A" GROUP
2. "KA" GROUP
3. "SA" GROUP
4. "TA" GROUP
5. "NA" GROUP
6. "HA" GROUP ▼

## FIG. 6C

1. KOICHI HASHI

2. YUMI HAMADA

## FIG. 6D

1. VOICE

2. HOT SUMMER

3. SEA ▼

## FIG. 6E

- SEA
- YUMI HAMADA
- DL Record
- 315¥

PURCHASE

## FIG. 6F

PLEASE CONFIRM THE FOLLOWING CONTRACT DETAILS, AND SELECT "ACCEPTANCE"

ACCEPTANCE

THE MUSIC DATA THAT YOU HAVE PURCHASED IS FOR PRIVATE USE ONLY.

## FIG. 7

START

DETERMINE RANDOM VALUE Vrad — Sb1

COMPUTE REFERENCE VALUE Vref — Sb2

COMPUTE COMPUTING VALUE X — Sb3

Q=TA1? — Sb4

NO →

YES ↓

DISPLAY COMPUTING VALUE X AS DISPLAY VALUE Y ON DISPLAY UNIT 260 — Sb6

DISPLAY COMPUTING VALUE X AS DISPLAY VALUE Y ON DISPLAY UNIT 260 — Sb5

INCREASE DISPLAY VALUE Y — Sb7

RECEIVE BILLING RESPONSE? — Sb8

NO

YES ↓

DISPLAY THAT DOWNLOAD IS COMPLETED — Sb9

END

*FIG. 8*

DOWNLOAD PERIOD FOR MD1'

K'req K'res Creq Cres Creq Cres

t1　t2　t3　t4　t5　t6　t7

Z1

DOWNLOADING

W—⌐46⌐% COMPLETED

Z2

DOWNLOADING

92%COMPLETED

Z3

DOWNLOADING

100%COMPLETED

## INTERNATIONAL SEARCH REPORT

| International application No. |
| --- |
| PCT/JP01/07684 |

### A. CLASSIFICATION OF SUBJECT MATTER
Int.Cl⁷ G10K15/02, H04N7/16

According to International Patent Classification (IPC) or to both national classification and IPC

### B. FIELDS SEARCHED

Minimum documentation searched (classification system followed by classification symbols)
Int.Cl⁷ G10K15/0, H04N7/162

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1971-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2000-200459 A (Sony Corporation),<br>18 July, 2000 (18.07.00),<br>Claim 17; page 4, Par. No. 9; Fig. 5 (Family: none) | 1,2,5,6<br>3,4,7-10<br>11-18 |
| X<br>Y<br>A | NTT Printec, "Shougaku Kessai Houshiki wo Riyou shita Internet-jou deno Denshi Shuppan", Insatsu Joho, Vol. 57, No. 4, (Japan), Kabushiki Kaisha Insatsu Shuppan Kenkyusho, 01 April, 1997 (01.04.97), pages 36-38 | 1,2,5,6<br>3,4,7-10<br>11-18 |
| Y | JP 11-143791 A (Sony Corporation),<br>28 May, 1999 (28.05.99),<br>Claims 5, 8; Fig. 5<br>& EP 918408 A2    & CN 1226770 A | 3,7 |
| Y | JP 2000-13371 A (Hitachi, Ltd.),<br>14 January, 2000 (14.01.00),<br>page 5, Par. No. 42; Fig. 8 (Family: none) | 3,7 |
| Y<br>A | JP 2000-30366 A (Sony Corporation),<br>28 January, 2000 (28.01.00),<br>Full text; Figs. 1 to 41 (Family: none) | 4,7-10<br>11-18 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 November, 2001 (30.11.01) | 25 December, 2001 (25.12.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

## INTERNATIONAL SEARCH REPORT

International application No.

PCT/JP01/07684

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 11-328851 A (Sony Corporation), 30 November, 1999 (30.11.99), page 3, Par. No. 7 & EP 1030301 A1 & WO 99/60569 A1 & CN 1274460 T | 1-18 |
| A | JP 2000-207219 A (Fujitsu Ten Limited), 28 July, 2000 (28.07.00), abstract; Fig. 9 & EP 1022656 A2 | 1-18 |
| A | JP 11-283003 A (Fuji Photo Film Co., Ltd.), 15 October, 1999 (15.10.99), Full text; Figs. 1 to 4 (Family: none) | 1-18 |

Form PCT/ISA/210 (continuation of second sheet) (July 1992)